# EUROPEAN PATENT SPECIFICATION

(11) **EP 1 800 898 B1**
(45) Date of publication and mention of the grant of the patent: **18.03.2009**
(21) Application number: 05785317.8
(22) Date of filing: 26.09.2005
(51) Int. Cl.: B60B 27/00, B60B 3/16

(54) **HUB UNIT FOR VEHICLE**
NABENEINHEIT FÜR FAHRZEUG
UNITÉ DE MOYEU POUR VÉHICULE

(30) Priority: 29.09.2004 JP 2004283714
(43) Date of publication of application: 27.06.2007
(73) Proprietor: JTEKT Corporation, Osaka-shi Osaka 542-8502 (JP)
(72) Inventor: YOKOTA, Tatsuya, Toyota-shi, Aichi 4710866 (JP)
(74) Representative: Sajda, Wolf E.
(86) International application number: PCT/JP2005/017595
(87) International publication number: WO 2006/035694

(56) References cited:
- EP-A- 0 936 086
- WO-A-03/064185
- WO-A1-93/17883
- JP-A- 07 149 102
- JP-A- 61 235 201
- JP-A- 2001 150 901
- JP-A- 2003 002 003
- JP-U- 57 001 702
- JP-U- 58 023 701

## Description

### Technical Field

The present invention relates to a hub unit for vehicle, according to the preamble of claim 1.

### Background Art

Conventionally, a hub unit has been used for rotatably supporting an automotive road wheel relative to a suspension system. As disclosed in the closest prior curf document JP 200 300 200 3A for example, the hub unit includes a rolling bearing and a flange formed integrally with a raceway member of the rolling bearing. The flange is formed with a plurality of bolt holes for mounting components such as a wheel and a disk rotor. These bolt holes extend through the flange in a thicknesswise direction thereof.
The flange of the hub unit is formed with a single bolt-hole group having a hole-pattern wherein a plurality of bolt holes having the same diameter is arranged circumferentially of the flange with equal spacing.

The above hub unit has the following problem. Many of the components mounted to the flange, such as the wheel and the disk rotor, have hole-patterns different from that of the flange. The hole-patterns vary depending upon the manufactures or the vehicle types. Specifically, the diameter of the holes formed in the component or a pitch circle diameter of the component varies. On the other hand, the flange is formed with a single bolt-hole group, which constitutes only one type of hole-pattern.
Namely, the components mountable to the flange are limited to those having this single type of hole-pattern. Therefore, the conventional hub unit manufacture is required to produce several types of hub units such as to accommodate components having the different hole-patterns. This is unfavorable in terms of the production efficiency of the hub units.
As disclosed in JP 200 115 090 1A a hub unit has been proposed which includes an adaptor interposed between the flange and the component to be mounted thereto, such as to permit one type of hub unit to be mounted with several types of components having different hole-patterns.

However, the above hub unit requires the adaptor independent from the hub unit for permitting plural types of components having the different hole-patterns from that of the hub unit. Accordingly, the hub unit includes an increased number of components and hence, is increased in cost.
In view of the foregoing, the invention has an object to provide a low-cost hub unit which permits the mounting of a plurality of types of components having different hole-patterns without employing an independent member.

### Disclosure of the Invention

A hub unit for vehicle according to the invention comprises a rolling bearing, and a flange formed integrally with a raceway member of the rolling bearing, the flange formed with a plurality of bolt holes extending therethrough in a thicknesswise direction thereof, and each of the plurality of bolt holes is formed with a female thread, and is **characterized in that** the flange is formed with several bolt-hole groups each having a hole-pattern in which the plurality of bolt holes having the same nominal female-thread diameter are circumferentially arranged on the same pitch circle diameter with equal spacing, and in that the several bolt-hole groups are mutually different in at least either one of the nominal female-thread diameter and the pitch circle diameter.
According to the invention, the flange is formed with several bolt-hole groups each having the hole-pattern and these bolt-hole groups are mutually different in at least either one of the nominal female-thread diameter and the pitch circle diameter. Thus, the plurality of hole-patterns is formed in the flange. Unlike the conventional flange using the adaptor as the independent member, this flange permits the direct mounting of several types of components having different hole-patterns. Therefore, a low-cost hub unit may be constructed.

It is preferred in the above hub unit that all the bolt holes constituting the several bolt-hole groups are arranged circumferentially of the flange with equal spacing.
In this case, the bolt holes are not concentrated on one circumferential area of the flange because all the bolt holes constituting the several bolt-hole groups are arranged circumferentially of the flange with equal spacing. Therefore, the flange is adapted to ensure a sufficient strength and is prevented from being lowered in rotational accuracy associated with irregular weight distribution.

### Brief Description of the Drawings

FIG. 1 is a fragmentary sectional view of a hub unit; and
FIG. 2 is a view as viewed in a direction of arrow A in FIG. 1.

### Best Mode for Carrying Out the Invention

An embodiment of the invention will hereinafter be described with reference to the accompanying drawings.

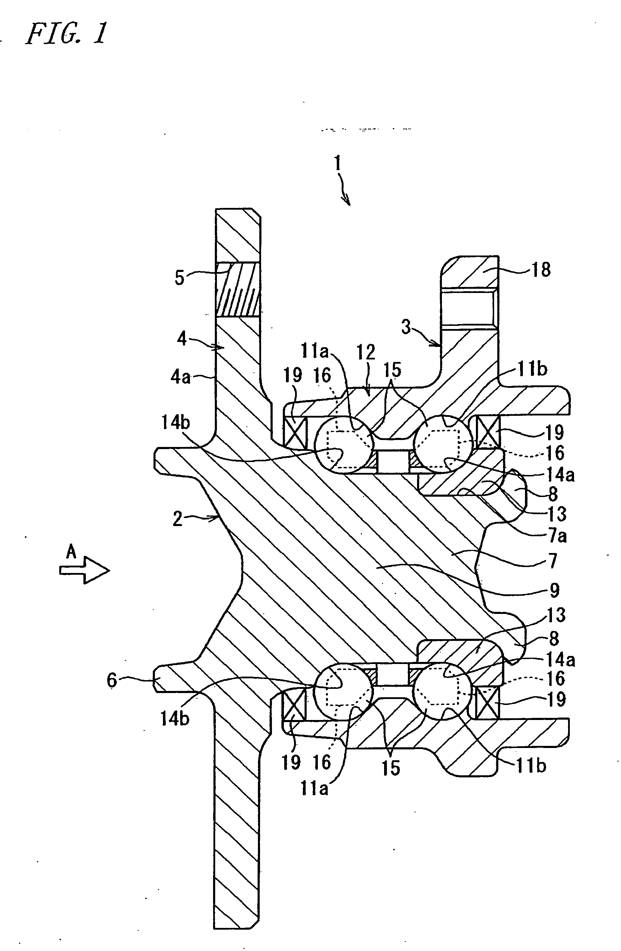

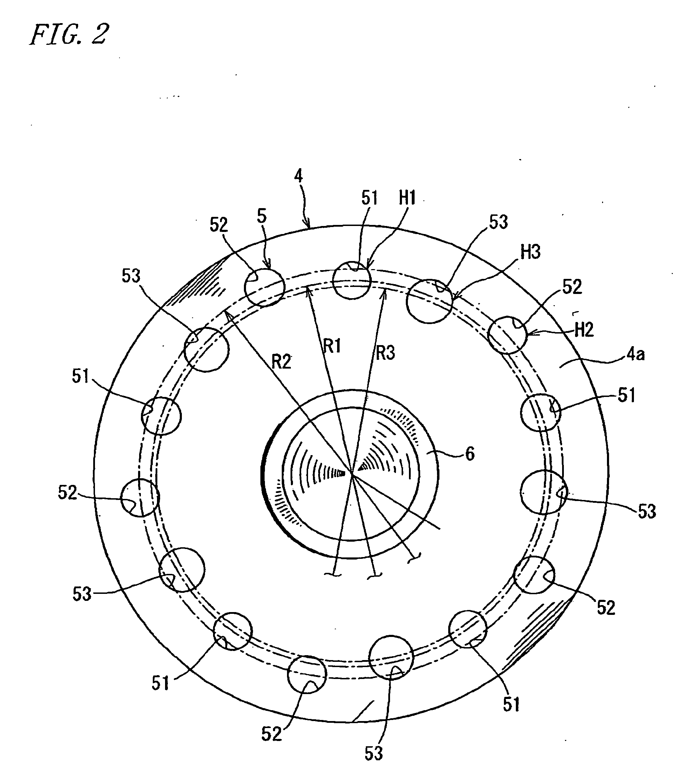

FIG. 1 shows a hub unit 1 according to the embodiment of the invention. FIG. 2 shows a state as viewed in a direction of an arrow A in FIG. 1.
A transverse direction as seen in FIG. 1 represents an axial direction of the hub unit 1. The left-hand side in the figure represents an axially outer side, whereas the right-hand side represents an axially inner side.

As shown in FIG. 2, the hub unit 1 is used for rotatably supporting a road wheel of an automotive vehicle relative to a suspension system. The hub unit 1 includes: a rolling bearing 3; a cylindrical hub wheel 2 defining a raceway member of the rolling bearing 3; and an annular flange 4 formed integrally with the hub wheel 2. The flange 4 is formed with a plurality of bolt holes 5 for mounting components (not shown) such as a wheel and a disk rotor. Furthermore, the flange 4 is centrally formed with an annular portion 6 projecting in an axial outward direction.

The hub wheel 2 is formed from a carbon steel (S55C), a bearing steel or the like. The hub wheel 2 includes: a small-diameter portion 7 having a circular sectional shape; a caulking portion 8 formed by radially outwardly bending an axially-inner-end of the small-diameter portion 7; and a great-diameter portion 9 having a greater diameter than the small-diameter portion 7, continuously extended from the small-diameter portion 7 in the axially outer side, and having a circular sectional shape. The great-diameter portion 9 of the hub wheel 2 is formed with the flange 4 which extends radially outwardly from an outside surface of the great-diameter portion.

The rolling bearing 3 may be, for example, a double-row ball bearing which includes: an outer ring 12 including a pair of outer raceways 11 a, 11b; and an inner ring member 13 tightly fitted on an outside surface 7a of the small-diameter portion 7 of the hub wheel 2 on an inside surface of the inner ring member 13. The inner ring member 13 is formed with an inner raceway 14a on a radially outer side thereof, the inner raceway 14a opposing the outer raceway 11b on the axially inner side. On the other hand, the great-diameter portion 9 of the hub wheel 2 is formed with an inner raceway 14b on the outside surface thereof, the inner raceway 14b opposing the outer raceway 11 a on the axially outer side.

The rolling bearing 3 further includes: a pair of rows of balls 15 as rolling elements rollably arranged between the inner and outer raceways in opposing relation; and a pair of cages 16 for retaining these balls 15 at predetermined circumferential space intervals. The rolling bearing 3 further includes: a bearing flange 18 which is extended radially outwardly from an outside surface of the outer ring 12 and to which a knuckle (not shown) of a steering mechanism is fixed; seal members 19 for sealing an annular space at axially opposite ends thereof, the annular space defined between the hub wheel 2 and the outer ring 12.

As shown in FIG. 2, the plurality of bolt holes 5 are so formed as to extend through the flange 4 in a thicknesswise direction thereof. The bolt holes are each formed with a female thread on an inside surface thereof. The flange 4 is formed with several bolt-hole groups H individually having hole-patterns. The term "hole-pattern", as used herein, means a pattern wherein plural bolt holes 5 having the same nominal female-thread diameter are circumferentially arranged on the same pitch circle diameter R with equal spacing.

The embodiment of the invention is constituted such that the above several bolt-hole groups H are mutually different in at least either one of the nominal female-thread diameter of the bolt holes 5 constituting the bolt-hole groups H or the pitch circle diameter R. Furthermore, all the bolt holes 5 constituting the plural bolt-hole groups H are arranged circumferentially of the flange 4 with equal spacing. Specifically, the flange 4 is formed with bolt-hole groups H1 to H3 having three types of hole-patterns, for example. Each of the bolt-hole groups H1 to H3 consists of five bolt holes 5, for example. The fifteen bolt holes 5 constituting these bolt-hole groups H are arranged circumferentially of the flange 4 with equal spacing.

More specifically, in a case where the flange 4 has a diameter of 140 mm, for example, the bolt-hole group H1 has a first hole-pattern wherein bolt holes 51 are so formed as to have a nominal female-thread diameter of 12 mm and a pitch circle diameter R1 of 114.3 mm.
The bolt-hole group H2 has a second hole-pattern wherein bolt holes 52 are so formed as to have a nominal female-thread diameter of 12 mm and a pitch circle diameter R2 of 120 mm.
The bolt-hole group H3 has a third hole-pattern wherein bolt holes 53 are so formed as to have a nominal female-thread diameter of 14 mm and a pitch circle diameter R3 of 112 mm. All these bolt holes 51, 52, 53 constituting the first to third bolt-hole groups H1 to H3 are arranged circumferentially of the flange 4 with equal spacing.

The wheel and the disk rotor may be mounted to the flange 4 of the above hub unit 1 as follows. The wheel and the disk rotor are pressed against an outer side surface 4a of the flange 4 in a manner to axially overlap with each other. The respective positions of the wheel and the disk rotor are adjusted such that the individual bolt holes of the wheel and the disk rotor are aligned with the corresponding bolt holes 5 of the flange 4. After the positional adjustment, bolts having the same nominal diameter with that of the female threads in the bolt holes 5 may be used for fastening the wheel from an axially outer side of the wheel.

According to the hub unit 1 having the aforementioned constitution, the flange 4 is formed with several bolt-hole groups H having the respective hole-patterns, and these bolt-hole groups H are mutually different in at least either one of the nominal female-thread diameter and the pitch circle diameter R. Thus, the several different hole-patterns are formed in the flange 4. Unlike the conventional flange using the adaptor as the independent member, therefore, the flange 4 permits the direct mounting of a plurality of different types of components, such as the wheel and the disk rotor, having the different hole-patterns. In addition, the hub wheel 2 is further reduced in weight by virtue of the several bolt-hole groups H1 to H3 formed in the flange 4. Accordingly, the suspension system of the automotive vehicle is reduced in unsprung weight so that the automotive vehicle may be improved in running stability, ride quality and fuel consumption.
All the bolt holes 51, 52, 53 constituting the several bolt-hole groups H1 to H3 are arranged circumferentially of the flange 4 with equal spacing and hence, the bolt holes 5 are not concentrated on one circumferential area of the flange 4. Therefore, the flange 4 is adapted to ensure a sufficient strength and is prevented from being lowered in rotational accuracy associated with irregular weight distribution.

It is to be noted that the invention is not limited to the foregoing embodiment.
For instance, the flange 4 may be formed on the outside surface of the outer ring 12.

## Claims

1. A hub unit for a vehicle, comprising:
a rolling bearing (3), and a flange (4) formed integrally with a raceway member of the rolling bearing (3), the flange (4) formed with a plurality of bolt holes (5) extending therethrough in a thicknesswise direction thereof,
- wherein each of the plurality of bolt holes (5) is formed with a female thread,
- **characterized in that** the flange (4) is formed with several bolt-hole groups (H1, H2, H3) each having a hole-pattern in which the plurality of bolt holes (5) having the same nominal female-thread diameter are circumferentially arranged on the same pitch circle diameter (R1, R2, R3) with equal spacing, and
- wherein the several bolt-hole groups (H1, H2, H3) are mutually different in at least either one of the nominal female-thread diameter and the pitch circle diameter (R1, R2, R3).

2. The hub unit for a vehicle according to Claim 1,
wherein all the bolt holes (5; 51, 52, 53) constituting the several bolt-hole groups (H1, H2, H3) are arranged circumferentially of the flange (4) with equal spacing.

## Patentansprüche

1. Nabeneinheit für ein Fahrzeug, die folgendes aufweist:
ein Wälzlager (3) und einen Flansch (4), der in integraler Weise mit einem Laufbahnelement des Wälzlagers (3) ausgebildet ist, wobei der Flansch (4) mit einer Vielzahl von Bolzenöffnungen (5) ausgebildet ist, die sich in dessen Dickenrichtung durch diesen hindurch erstrecken,
- wobei jede von der Vielzahl von Bolzenöffnungen (5) mit einem Innengewinde ausgebildet ist,
**dadurch gekenntzeichnet,**
- **daß** der Flansch (4) mit mehreren Bolzenöffnungs-Gruppen (H1, H2, H3) ausgebildet ist, von denen jede ein Öffnungsmuster aufweist, bei dem die Vielzahl der Bolzenöffnungen (5) mit dem gleichen Innengewinde-Nenndurchmesser umfangsmäßig auf dem gleichen Teilkreisdurchmesser (R1, R2, R3) mit gleicher Beabstandung voneinander angeordnet sind, und
- wobei die mehreren Bolzenöffnungs-Gruppen (H1, H2, H3) sich in mindestens einem von dem Innengewinde-Nenndurchmesser und dem Teilkreisdurchmesser (R1, R2, R3) voneinander unterscheiden.

2. Nabeneinheit für ein Fahrzeug nach Anspruch 1,
wobei sämtliche Bolzenöffnungen (5; 51, 52, 53), die die mehreren Bolzenöffnungs-Gruppen (H1, H2, H3) bilden, in Umfangsrichtung des Flansches (4) mit der gleichen Beabstandung angeordnet sind.

## Revendications

1. Unité de moyeu pour un véhicule comprenant :
- un palier à roulement (3) et une bride (4) formée d'une seule pièce avec un élément de chemin de roulement du palier à roulement (3), la bride étant formée avec une pluralité de trous (5) de boulon s'étendant au travers dans une direction d'épaisseur de celle-ci,
- dans lequel chaque trou de la pluralité de trous (5) de boulon comprend un filetage intérieur,
**caractérisée en ce que** la bride (4) est formée avec plusieurs groupes de trous de boulon (H1, H2, H3), chacun ayant une configuration de perçage,
dans laquelle la pluralité de trous (5) de boulon ayant le même diamètre de filet intérieur nominal est disposée de manière circonférentielle sur le même diamètre de cercle (R1, R2, R3) avec un espacement égal, et
dans lequel les plusieurs groupes de trous de boulon (H1, H2, H3) sont mutuellement différents dans au moins l'un des diamètres suivants : le diamètre de filet intérieur nominal et le diamètre de cercle (R1, R2, R3).

2. Unité de moyeu pour un véhicule selon la revendication 1,
dans lequel tous les trous de boulon (5 ; 51, 52, 53) constituant les plusieurs groupes de trous de boulon (H1, H2, H3) sont disposés de manière circonférentielle sur la bride (4) avec un espacement égal.
